Europäisches Patentamt

(19) European Patent Office

Office européen des brevets

(11) Publication number: **0 002 964**
**B1**

# (12) EUROPEAN PATENT SPECIFICATION

(45) Date of publication of patent specification: **19.05.82**

(51) Int. Cl.³: **B 62 M 9/10**

(21) Application number: **78300916.0**

(22) Date of filing: **28.12.78**

(54) Chain wheel and crank assembly for a cycle.

(30) Priority: **28.12.77 JP 157659/77**
**27.02.78 JP 25550/78**

(43) Date of publication of application:
**11.07.79 Bulletin 79/14**

(45) Publication of the grant of the patent:
**19.05.82 Bulletin 82/20**

(84) Designated Contracting States:
**BE DE FR GB SE**

(56) References cited:
**FR - A - 983 303**
**FR - A - 1 029 474**
**GB - A - 921 614**
**US - A - 4 009 621**

(73) Proprietor: **SHIMANO INDUSTRIAL COMPANY LIMITED**
**77, 3-cho Oimatsu-cho Sakai-shi**
**Osaka (JP)**

(72) Inventor: **Segawa, Takashi**
**13-22, 3-cho, Takakuradai**
**Sakai-shi Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Chain wheel and crank assembly for a cycle

The invention relates to a chain wheel and crank assembly for a cycle having a chain wheel mounted on a crank shaft of a crank for a cycle by means of an adapter.

Generally, the chain wheel and crank for a bicycle are rotatably supported from the bicycle frame on a bracket and a driving chain is stretched across the chain wheel and a freewheel on a rear hub of the bicycle, so that the crank arms are rotated by pedalling so as to drive the bicycle.

Chain wheels are cranks of this general type may be divided into two classes in one of which the chain wheel is attached directly to the crank shaft and in the other of which the chain wheel is mounted on the crank shaft by way of an adapter.

In the former case in which the chain wheel is mounted directly on the crank arm, the amount of material used for the chain wheel is increased so that it becomes heavier and when such a chain wheel with worn or damaged teeth has to be renewed, it is troublesome to remove the chain wheel from the crank. In addition the chain wheel requires an additional portion by means of which it is mounted on the crank shaft, which adds to the expense thereof.

There is known from French Patent Specification No. 1029474, a chain wheel and crank assembly for a cycle, comprising a crank arm connected to a crank shaft, at least one chain wheel, and an adapter for use in connecting said at least one chain wheel to the crank arm, each said chain wheel having an annular form and having at its outer periphery a large number of teeth and at its inner periphery first mounting means, said adapter comprising a boss having a bore in which said crank shaft is engageable and a plurality of legs extending radially outwardly from said boss said adapter being provided with at least one annular member, interconnecting parts of said legs remote from said boss and having second mounting means, said first and second mounting means being formed and arranged for co-operation in the mounting of said chain wheels on said adapter.

The present invention provides such a chain wheel and crank assembly characterized in that, a said annular member is larger in its outer diameter than the larger diameter chain wheel of said chain wheels, said annular member being displaced axially relative to said larger diameter chain wheel and said second mounting means being disposed on said legs of said adapter.

Thus the adapter, whose legs are interconnected by the annular member, is very high in hardness and/or stiffness thereby improving the durability of the chain wheel and crank assembly and the adapter may be made of light alloy, such as aluminium alloy, thereby allowing the chain wheel and crank assembly to be light in weight and inexpensive to produce.

Various ways of carrying out the invention are described in detail below with reference to the accompanying drawings, which illustrate some prefered embodiments only and in which:—

Figure 1 is a front view of a preferred embodiment of a chain wheel and crank according to the invention;

Figure 2 is a longitudinal sectional view thereof;

Figure 3 is a partial rear view of the adapter alone of the modified embodiment of Figures 1 and 2;

Figure 4 is a front view of one chain wheel generally similar to those of the above embodiment;

Figure 5 is a partial perspective view thereof;

Figure 6 is a partial perspective view of a modified chain wheel; and

Figure 7 is a partial front view of a further modified chain wheel.

The figures show a two speed chain wheel and crank comprising two chain wheels 1 and 11 having different diameters and different numbers of teeth and mounted on an adapter 2. In use thereof a front derailleur (not shown) is used to switch a driving chain (not shown) between the larger diameter chain wheel and the smaller diameter wheel 11 for changing gear.

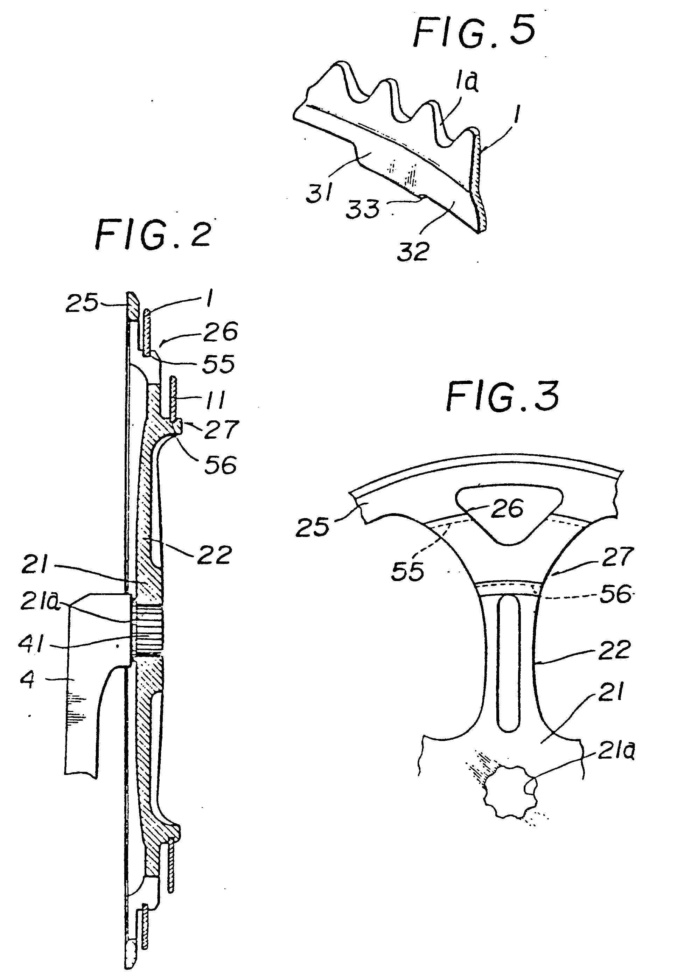

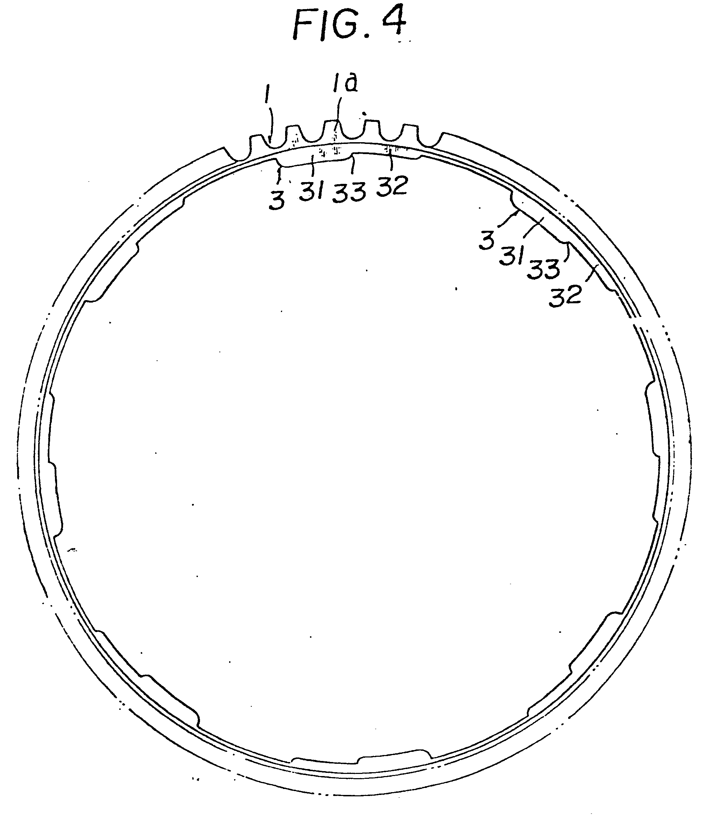

The chain wheels 1 and 11 are made of relatively hard material such as iron or an alloy thereof and with a generally annular form as shown in Figure 3. At their outer peripheries are provided a large number of teeth 1a and 11a and at their inner peripheries first mounting means 3 further described hereinbelow.

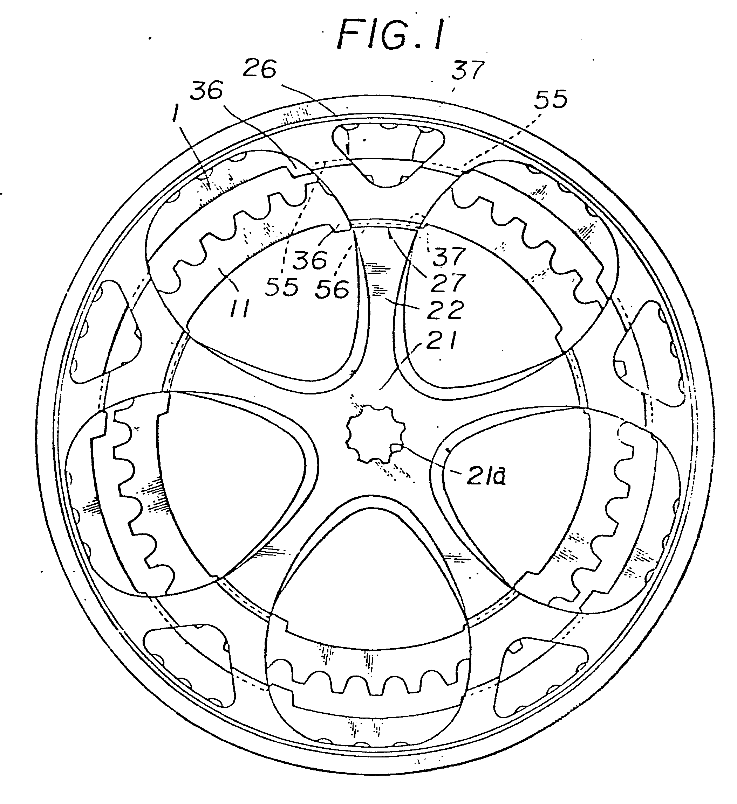

The adapter 2 is made of light alloy, such as aluminium alloy and, as shown in Figures 1 to 3, comprises a boss 21 having a bore 21a for fitting closely onto a crank shaft 41, a plurality of legs 22 extending radially outwardly of the boss 21, and an annular member 25, interconnecting the outer ends of the legs 22. The annular member 25 is provided with second mounting means 55, 56 for rigidly connecting the chain wheels 1 and 11 thereto.

The annular member 25 is larger in thickness than each of the chain wheels 1 and 11 and interconnects the legs 22, thereby contributing to the strength and stiffness of the adapter 2.

The mounting of the chain wheels 1 and 11 on the adapter 2 will now be considered in detail. Referring to Figures 1 to 3, the chain wheels 1 and 11 have a plurality (five in the drawing) of first and second engagement portions 36 and 37, extending radially inwardly from the inner periphery of each said chain wheel 1, 11 as shown in Figures 1 and 2. Also, the annular member 25 has engagement portions 26, 27 extending across the legs 22 and, concentrically of the adapter 2 along one side thereof, radially outwardly facing grooves 55 and 56 engageable with the second chain engagement portions 37. Thus, the chain wheel engagement portions 36 and 37 constitute the first mounting means of the chain wheels and the annular member engagement portions 55 and 56 constitute the second mounting means of the adapter.

The annular member 25 is larger in its outer diameter than the larger diameter chain wheel 1 and is cranked axially towards the adjacent crank arm 4 at a position spaced radially inwardly from its periphery and at which are provided second mounting means 26 for the larger chain wheel (see below), and then extends radially outwards again as shown in Figure 2 so as to serve as a protector assisting in prevention of displacement of the driving chain off the chain wheel when it is switched thereto from the smaller chain wheel 11.

The second mounting means of the adapter are disposed firstly at the radially outer ends of the legs 22 at the axially bent portions of the adapter 25 and secondly at radially intermediate portions of the legs 22, whereat are provided second mounting means 27 which project axially of the adapter 2.

The first mounting means provided on the chain wheels 1 and 11, at their inner peripheries, comprise first and second engagement portions 36 and 37 of relatively smaller and larger radial width. The second engagement portions 37 are engageable with and in the respective grooves 55 and 56 for mounting of the larger and smaller diameter chain wheels 1 and 11 on the adapter 2. The first engagement portions 36 abut at ends thereof, which ends constitute shoulders between the first and second chain wheel engagement portions 36, 37 respectively, against end faces or shoulders of the first and second mounting portions 26 and 27 (grooves 55, 56) thereby to restrain the chain wheels 1 and 11 against angular rotational displacement in the reverse direction with respect to the driving direction of the chain wheel and crank assembly.

Specifically, when the adapter 2 is rotated in the driving direction (anti-clockwise as viewed in Figure 1), the chain wheel rotates together with the adapter 2. However, when the adapter 2 is rotated in the reverse direction (clockwise as viewed in Figure 1), the chain wheel is movable relative to the adapter 2, but the movement of the chain wheel 1 is not subject to such a large torque as the driving torque, whereby the chain wheel 1 is held to prevent movement in the driving direction by inter-engagement of the second chain wheel engagement portions 32 with the grooves 52. In addition, in order to prevent reverse movement, in the reverse direction with respect to the driving direction, the chain wheel may be held by a screw attached to the adapter 2, or each of the second chain wheel engagement portions 37 may be tapered in radial width toward the forward end thereof from the side of the first chain wheel engagement portion 36 and force-fitted into the groove 55, 56 (as appropriate) by a wedging action.

In more detail, as regards the construction of the mounting means, the space between neighbouring ones of the second mounting means 26, 27 extending across the legs 22 is in each case larger in circumferential length than the combined length of a respective first and second engagement portion 36 and 37, as may be seen in Figure 1, and has a horizontal surface of larger width than the thickness of the chain wheel 1 as may be seen in Figure 2. A circle extending through the radially outer surface of the second mounting means 26, 27, namely a circle concentric with the centre of crank shaft receiving bore 21a in boss 21, in each case, is made smaller in diameter than a circle extending through the radially inward periphery of the respective chain wheel 1, 11, so that the radially inward periphery of the respective chain wheel 1, 11 between neighbouring first mounting means can pass thereover. Each of the grooves 55, 56 has a slightly larger radial width than the radial thickness of that part of the second chain wheel engagement portion 37 of the chain wheel 1 which extends inwardly of the first chain wheel engagement portion 36 to accommodate that part of said portion 37 therein. A circle extending through the bottom of each groove 55, 56 concentric with the crank shaft receiving bore 21a, is slightly smaller in diameter than a circle connecting the radially inner surfaces of the plurality of second chain wheel engagement portions 37, but larger than a circle connecting the radially inner surfaces of the first engagement portions 36 so that the second engagement portions 37, only, may fit into the grooves 55, 56 in each case.

The abovedescribed mounting means could of course be replaced by screw or other mounting means as described below.

Each chain wheel 1, 11 is mounted onto the adapter 2 in such a manner that the first and second chain wheel engagement portions 36 and 37 are positioned between the respective second mounting means 26, 27 i.e. between the legs 22 and the chain wheel 1 is then rotated in the reverse direction (clockwise as viewed in Figure 1), until the second chain wheel engagement portions 37 are engaged with and in the respective grooves 55, 56 of the adapter 2 and the stepped portions between the first and second chain wheel engagement portions 36, 37 are abutted against the end faces or shoulders of the respective second mounting means 26, 27 of the adapter 2.

Thus, the chain wheel 1 is restrained from angular rotational movement relative to the adapter 2, by means of the abutment of the chain wheel stepped portions against the shoulders of the adapter and engagement of the second chain wheel engagement portions 37 with the grooves 55, 56, as well as being restrained from axial movement.

The adapter 2 itself is mounted by insertion of the crank shaft 41 in the bore 21a.

In a generally similar chain wheel to those described above, which chain wheel is shown in Figure 4, the first mounting means comprise first chain wheel engagement portions of larger radial width 31 and second chain wheel engagement portions of smaller width 32 connected by stepped portions 33 and each having a predetermined circumferential length. As may be seen in Figure 5 the second chain wheel engagement portions 32 are cranked axially parallel to the inner periphery of the chain wheel 1.

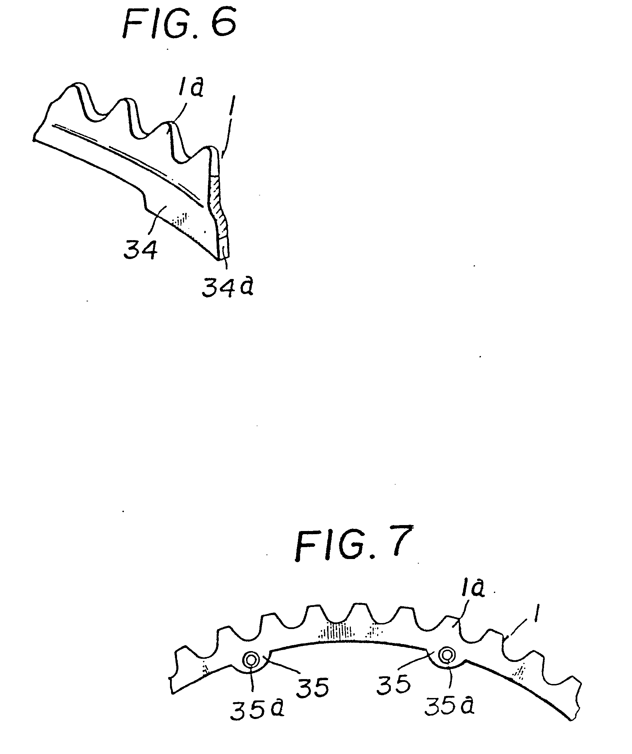

The first and second chain wheel engagement portions 31 and 32, which are different in radial width and have the stepped portions 33 in the above embodiment, may also be formed in a further embodiment with equal radial width as shown in Figure 6. In Figure 6 a chain wheel engagement portion 34 has a different construction from that of the first and second chain wheel engagement portions 31 and 32 and is intended for use with second mounting means grooves which are closed at their rearward ends (with respective to the driving direction), so that the closed rearward end faces abut against the rearward end faces of the chain wheel engagement portions 34.

Other first and second mounting means for the chain wheels 1, 11 and the adapter 2 may also be employed, for example, in the form of female screw threads (not shown) provided at the inner peripheries of chain wheels and complementary male screw thread portions (not shown) provided at the annular member second mounting means 26, 27. Alternatively the inner periphery of each chain wheel 1, 11 may be provided with a plurality of radially inwardly extending mounting tongues 35 disposed at regular intervals and having mounting bores 35a as shown in Figure 7, the adapter 2 being provided with threaded bores disposed for corresponding with respective ones of the bores 35a, so that the chain wheels 1, 11 may be mounted on the adapter 2 by means of screws (not shown) extending through both said bores 35a.

As will be clearly understood from the above description the chain wheel and crank assembly of the invention are so constituted that a chain wheel having a large number of teeth may be connected to a crank arm through an adapter having an annular member. Hence, the chain wheel, even when made of strong material, such as iron, can be made much smaller in radial width between the tips of the teeth and its inner periphery and thus much lighter in weight. Also, the adapter, even when made of light alloy, such as aluminium alloy, is increased in its strength thanks to the use of the annular member thereby improving the durability of and reducing the weight of the chain wheel and crank as a whole, whilst at the same time reducing production costs.

Furthermore, the chain wheel, when the gear teeth thereof become worn or damaged, can be readily and hence inexpensively replaced by virtue of the detachable mounting thereof on the adapter.

### Claims

1. A chain wheel and crank assembly for a cycle, comprising a crank arm (4) connected to a crank shaft (41) at least one chain wheel (1, 11), and an adapter (2) for use in connecting said at least one chain wheel (1, 11) to the crank arm (4), each said chain wheel (1, 11) having an annular form and having at its outer periphery a large number of teeth (1a) and at its inner periphery first mounting means (36, 37), said adapter (2) comprising a boss (21) having a bore (21a) in which said crank shaft (41) is engageable and a plurality of legs (22) extending radially outwardly from said boss (21), said adapter (2) being provided with at least one annular member (25) inter-connecting parts of said legs (22) remote from said boss (21) and having second mounting means (26, 27), said first and second mounting means being formed and arranged for co-operation in the mounting of said chain wheels (1, 11) on said adapter (2), characterized in that, a said annular member (25) is larger in its outer diameter than the larger diameter chain wheel (1) of said chain wheels (1, 11), said annular member (25) being displaced axially relative to said larger diameter chain wheel (1) and said second mounting means being disposed on said legs (22) of said adapter (2).

2. A chain wheel and crank assembly as claimed in Claim 1, wherein said first mounting means of each said chain wheel (1, 11) comprises a plurality of chain wheel engagement portions (36, 37) extending radially inwardly of the inner periphery of the chain wheel and the second mounting means comprises grooves (55, 56) for receiving said chain wheel engagement portions (36, 37), said grooves facing outwardly.

3. A chain wheel and crank assembly as claimed in Claim 2, wherein said chain wheel engagement portions (36, 37) comprise first engagement portions (36) larger in width in the radial direction and second engagement portions (37) smaller in width in the radial direction with stepped portions therebetween, each of said engagement portions (36, 37) having a predetermined circumferential length, a circle extending through the bottom of each of said grooves (55, 56) being larger in diameter than a circle extending through the radially inner surface of each of said first engagement portions (36) and being slightly smaller in diameter than a circle extending through the radially inner surface of each of said second engagement portions (37), shoulders being provided at one end of each of said grooves (55, 56).

4. A chain wheel and crank assembly as claimed in Claim 2, wherein each of said chain wheel engagement portions (36, 37) has a predetermined circumferential length and a predetermined width in the radial direction which width is variable along the length thereof.

5. A chain wheel and crank assembly as claimed in any one of Claims 2 to 4, wherein said chain wheel engagement portions (36, 37) are formed and arranged so that engagement thereof with the grooves (55, 56) is effected by relative angular rotational displacement of the chain wheel(s) (1, 11) and the adapter (2) in a reverse direction with respect to the driving direction of the assembly.

6. A chain wheel and crank assembly as claimed in Claim 1, wherein said first and second mounting means provided on said chain wheels (1, 11) and adapter (2), respectively, comprise a plurality of threaded bores (35a) and screws.

7. A chain wheel and crank assembly as claimed in any one of Claims 1 to 6, wherein are provided two or more chain wheels (1, 11) with different numbers of teeth (1a) and different diameters.

**Revendications**

1. Dispositif à manivelle et roue dentée pour pédalier de bicyclette, comprenant un bras de manivelle (4) relié à un arbre de pédalier (41), au moins une roue dentée pour chaîne (1, 11), et une pièce intermédiaire ou adaptateur (2), qui permet de relier la ou les roues dentées (1, 11) au bras de manivelle (4), chaque roue dentée (1, 11) ayant une forme annulaire et comportant à sa périphérie extérieure un grand nombre de dents (1a) et à sa périphérie intérieure des premiers moyens d'assemblage (36, 37), l'adaptateur (2) comportant un bossage (21) à alésage (21a), dans lequel peut s'engager l'arbre de pédalier (41), et une pluralité de bras (22) disposés radialement vers l'extérieur du bossage (21), l'adaptateur (2) comportant au moins une pièce annulaire (25) qui relie entre elles les parties des bras (22) éloignées du bossage et qui porte des deuxièmes moyens d'assemblage (26, 27), les premiers et les deuxièmes moyens d'assemblage étant formés et disposés de façon à coopérer pour la fixation des roues à chaîne (1, 11) sur l'adaptateur (2), lequel dispositif est caractérisé en ce que la pièce annulaire (25) a un diamètre extérieur plus grand que le diamètre de la roue dentée (1) qui est la plus grande des roues dentées (1, 11), la pièce annulaire (25) étant décalée axialement par rapport à la roue dentée (1) de plus grand diamètre et les deuxièmes moyens d'assemblage étant prévus sur les bras (22) de l'adaptateur (2).

2. Dispositif selon la Revendication 1, caractérisé en ce que les premiers moyens d'assemblage de chaque roue dentée (1, 11) comprennent une pluralité de parties d'engagement de roue dentée ou tenons (36, 37) dirigés radialement vers l'intérieur à partir de la périphérie intérieure de la roue dentée, et en ce que les deuxièmes moyens d'assemblage comprennent des gorges (55, 56) de réception des tenons (36, 37) de roue dentée, ces gorges étant ouvertes vers l'extérieur.

3. Dispositif selon la Revendication 2, caractérisé en ce que les tenons (36, 37) de roue dentée comprennent des premiers tenons (36) de largeur radiale plus grande et des seconds tenons (37) de largeur radiale plus petite, raccordés par des épaulements, chacun des tenons (36, 37) ayant une longueur circonférentielle prédéterminée, un cercle passant par le fond de chacune des gorges (55, 56) ayant un diamètre supérieur à celui d'un cercle passant par la surface radialement intérieure de chacun des premiers tenons (36) et un diamètre légèrement plus petit que celui d'un cercle passant par la surface radialement intérieure de chacun des deuxièmes tenons (37), des épaulements étant prévus à une extrémité de chacune des gorges (55, 56).

4. Dispositif selon la Revendication 2, caractérisé en ce que chacun des tenons (36, 37) de roue dentée a une longueur circonférentielle prédéterminée et une largeur radiale prédéterminée, cette largeur étant variable dans le sens de la longueur du tenon.

5. Dispositif selon l'une quelconque des Revendications 2 à 4, caractérisé en ce que les tenons (36, 37) de roue dentée sont formés et disposés de façon à ce que leur engagement dans les gorges (55, 56) s'effectue par déplacement angulaire relatif de rotation de la ou des roues dentées (1, 11) et de l'adaptateur (2), en sens inverse du sens d'entraînement de pédalier.

6. Dispositif selon la Revendication 1, caractérisé en ce que les premiers et les deuxièmes moyens d'assemblage prévus sur les roues dentées (1, 11) et l'adaptateur (2), respectivement, comprennent une pluralité de trous taraudés (35a) et de vis.

7. Dispositif selon l'une quelconque des Revendications 1 à 6, caractérisé en ce qu'il comporte deux roues dentées (1, 11) ou davantage, ayatn des nombres de dents (1a) différents et des diamètres différents.

**Patentansprüche**

1. Kettenrad- und Kurbelanordnung für ein Fahrrad, bestehend aus einem mit einer Kurbelachse (41) verbundenen Kurbelarm (4), mindestens einem Kettenrad (1, 11) und einem Zwischenstück (2) zur Verbindung dieses mindestens einen Kettenrads (1, 11) mit dem Kurbelarm (4), wobei jedes besagte Kettenrad (1, 11) ringförmig ist und auf seinem Aussenumfang eine grosse Anzahl Zähne (1a) und auf seinem Innenumfang erste Befestigungsmittel (36, 37) aufweist, wobei dieses Zwischenstück (2) aus einer Nabe (21) mit einer Bohrung (21a), in der diese Kurbelachse (41) eingreifen kann, und einer Mehrzahl sich von dieser Nabe (21) radial auswärts erstreckender Schenkel (22) besteht, sowie dieses Zwischenstück (2) mit mindestens einem ringförmigen, die von jener Nabe (21) abgelegenen Teile dieser Schenkel (22) miteinander verbindenden Glied (25) versehen ist und zweite Befestigungsmittel (26, 27) aufweist, wobei diese ersten und zweiten Befestigungsmittel so ausgebildet und angeordnet sind, dass sie zur Befestigung der besagten Kettenräder (1, 11) auf diesem Zwischenstück (2) zusammenwirken, dadurch gekennzeichnet, dass ein solches ringförmiges Glied (25) in seinem Aussendurchmesser grösser ist als das Kettenrad (1) grösseren Durchmessers unter den besagten Kettenrädern (1, 11), wobei dieses ringförmige Glied (25) gegenüber diesem Kettenrad (1) grösseren Durchmessers axial versetzt ist und jene zweiten Befestigungsmittel auf besagten Schenkeln (22) jenes Zwischenstücks (2) angeordnet sind.

2. Kettenrad- und Kurbelanordnung nach Anspruch 1, worin die besagten ersten Befestigungsmittel jedes dieser Kettenräder (1, 11) eine Mehrzahl von sich vom Innenumfang des Kettenrads radial nach innen erstreckenden Kettenradeingriffsteilen (36, 37) und die zweiten Befestigungsmittel Rillen (55, 56) zur Aufnahme dieser Kettenradeingriffsteile (36, 37) umfassen, wobei diese Rillen nach aussen weisen.

3. Kettenrad- und Kurbelanordnung nach Anspruch 2, worin diese Kettenradeingriffsteile (36, 37) erste Eingriffsteile (36), deren Breite in der radialen Richtung grösser ist, und zweite Eingriffsteile (37), deren Breite in radialer Richtung kleiner ist, mit abgestuften Teilen dazwischen umfassen, wobei jedes dieser Eingriffsteile (36, 37) eine vorbestimmte Umfangslänge aufweist und ein durch den Boden jeder dieser Rillen (55, 56) verlaufender Kreis einen grösseren Durchmesser als ein durch die radial innere Oberfläche jedes dieser ersten Eingriffsteile (36) verlaufender Kreis besitzt und im Durchmesser etwas kleiner ist als ein durch die radial innere Oberfläche jedes dieser zweiten Eingriffsteile (37) verlaufender Kreis, wobei an einem Ende jeder dieser Rillen (55, 56) Schultern vorgesehen sind.

4. Kettenrad- und Kurbelanordnung nach Anspruch 2, worin diese Kettenradeingriffsteile (36, 37) jeweils eine vorbestimmte Umfangslänge und eine entlang deren Länge veränderliche vorbestimmte Breite in radialer Richtung aufweisen.

5. Kettenrad- und Kurbelanordnung nach einem der Ansprüche 2 bis 4, worin diese Kettenradeingriffsteile (36, 37) so ausgebildet und angeordnet sind, dass deren Eingriff mit den Rillen (55, 56) durch eine relative Winkeldrehbewegung des bzw. der Kettenräder (1, 11) und des Zwischenstücks (2) in der umgekehrten Richtung bezüglich der Antriebsrichtung der Anordnung zustandekommt.

6. Kettenrad- und Kurbelanordnung nach Anspruch 1, worin die besagten, auf jenen Kettenrädern (1, 11) bzw. dem Zwischenstück (20 vorgesehen ersten bzw. zweiten Befestigungsmittel aus einer Mehrzahl von Gewindebohrungen (35a) und Schrauben bestehen.

7. Kettenrad- und Kurbelanordnung nach einem der Ansprüche 1 bis 6, worin zwei oder mehr Kettenräder (1, 11) mit verschiedener Anzahl von Zähnen (1a) und unterschiedlichen Durchmessern vorgesehen sind.

FIG. 1

0 002 964

0 002 964

FIG. 5

FIG. 2

FIG. 3

2

0 002 964

FIG. 4

3

## FIG. 6

## FIG. 7